# EUROPEAN PATENT APPLICATION

(11) **EP 4 692 130 A1**
(43) Date of publication of application: **11.02.2026**
(21) Application number: 24780720.9
(22) Date of filing: 28.03.2024
(51) Int. Cl.: C08F 2/44

(54) **CURABLE COMPOSITION AND CURED PRODUCT**

(30) Priority: 30.03.2023 JP 2023056415
(71) Applicant: Cosmo Oil Lubricants Co., Ltd., Tokyo 104-8352 (JP)
(72) Inventor: KURAKAKE, Hekiru, Satte-shi, Saitama 340-0193 (JP); WATANABE, Satoshi, Satte-shi, Saitama 340-0193 (JP)
(74) Representative: Adamson Jones
(86) International application number: PCT/JP2024/012845
(87) International publication number: WO 2024/204621

(57) **Abstract**

A curable composition includes a thermally-conductive filler (A), a monomer (B) having a (meth)acryloyl group, a polymerization initiator (C), a dispersant (D), and a plasticizer (E). In the curable composition, the content of the thermally-conductive filler (A) is 90% by mass or more with respect to the total mass of the curable composition, and the percentage of the content of the plasticizer (E) to the total content of the monomer (B) and the plasticizer (E) is from 40% by mass to 65% by mass.

## Description

### Technical Field

The present disclosure relates to a curable composition and a cured product.

### Background Art

In recent years, the performance of electronic instruments such as personal computers, cell phones, and personal digital assistants (PDA), and illuminators and displays such as light emitting diodes (LEDs) and electronic luminescent (EL) devices has been significantly improved due to significant improvement in the performance of computing elements or light emitting elements. Generated heat has also been significantly increased due to improvement in the performance of computing elements or light emitting elements in such manners. Thus, how to dissipate heat in electronic instruments, illuminators, and displays has become an important problem. Countermeasures of disposing thermal interface materials (TIMs, thermally conductive materials) between heat generators and radiators to transfer heat generated from computing elements or light emitting elements to the radiators without losing the heat, to radiate the heat through the radiators, have been taken as countermeasures against heat. Known examples of materials commonly used as the TIMs include heat dissipation sheets, thermally-conductive greases, and gap fillers. Gap fillers which are in paste forms in early stages, and are cured and become solid after application of the gap fillers have received attention.

For example, International Publication No. WO 2020/149193 discloses a curable composition including a compound (A) having one (meth)acrylate group in one molecule, a compound (B) having two or more (meth)acrylate groups in one molecule, a polymerization initiator (C), a dispersant (D), and a thermally-conductive filler (E) including zinc oxide, as a gap filler excellent in flexibility, morphological stability, and thermal conductivity.

### SUMMARY OF INVENTION

### Technical Problem

A problem to be solved by the present disclosure is to provide: a curable composition that provides a cured product having high flexibility and has excellent curability; and a cured product having high flexibility.

### Solution to Problem

The present disclosure includes the following aspects.
<1> A curable composition including:
   a thermally-conductive filler (A);
   a monomer (B) having a (meth)acryloyl group;
   a polymerization initiator (C);
   a dispersant (D); and
   a plasticizer (E),
   wherein a content of the thermally-conductive filler (A) is 90% by mass or more with respect to a total mass of the curable composition, and
   a percentage of a content of the plasticizer (E) to a total content of the monomer (B) and the plasticizer (E) is from 40% by mass to 65% by mass.
<2> The curable composition according to <1>, wherein a percentage of the content of the plasticizer (E) to a total content of the monomer (B), the polymerization initiator (C), the dispersant (D), and the plasticizer (E) is from 40% by mass to 65% by mass.
<3> The curable composition according to <1> or <2>, wherein a percentage of a content of the monomer (B) to the total content of the monomer (B), the polymerization initiator (C), the dispersant (D), and the plasticizer (E) is from 30% by mass to 60% by mass.
<4> The curable composition according to any one of <1> to <3>, wherein the monomer (B) includes a compound represented by the following Formula (1): 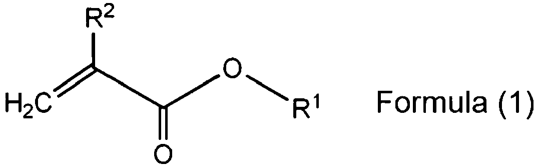 wherein in Formula (1), R¹ represents an alkyl group having from 1 to 50 carbon atoms, and R² represents a hydrogen atom or a methyl group.
<5> The curable composition according to any one of <1> to <4>, wherein the monomer (B) includes a compound represented by the following Formula (2): 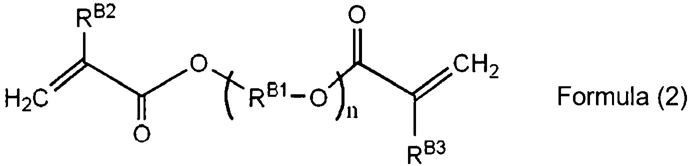 wherein in Formula (2), R^{B1} represents an alkylene group having from 1 to 5 carbon atoms, each of R^{B2} and R^{B3} independently represents a hydrogen atom or a methyl group, and n represents an integer of 4 or more.
<6> The curable composition according to any one of <1> to <5>, wherein the plasticizer (E) includes at least one selected from the group consisting of a polymer having a glass transformation temperature of -20°C or less, and a compound except a polymer, having a softening temperature of -20°C or less.
<7> A cured product of the curable composition according to any one of <1> to <6>.

### Advantageous Effects of Invention

In accordance with the present disclosure, a curable composition that provides a cured product having high flexibility and has excellent curability, and a cured product having high flexibility are provided.

### DESCRIPTION OF EMBODIMENTS

A curable composition according to the present disclosure and a cured product thereof are described in detail below.

In the present disclosure, "x to y" representing a numerical range represents a range including the numerical values described as the upper and lower limits of x and y, respectively. A case in which only the upper limit value in the numerical range represented by "x to y" is expressed in a unit means that the lower limit value is also expressed in the same unit.

In the present disclosure, in a case in which plural kinds of substances corresponding to each component exist in the composition, the content by percentage or amount of each component in the composition means, unless otherwise specified, the total content by percentage or amount of the plural kinds of substances existing in the composition.

In a numerical range expressed in a stepwise manner in the present disclosure, the upper or lower limit value expressed in a certain numerical range may be replaced by the upper or lower limit value in another numerical range expressed in a stepwise manner.

In a numerical range expressed in the present disclosure, the upper or lower limit value expressed in a certain numerical range may be replaced by values described in Examples.

In the present disclosure, "(meth)acryl" is a word used as a concept encompassing both "acryl" and "methacryl", and "(meth)acryloyl" is a word used as a concept encompassing both "acryloyl" and "methacryloyl".

In the present disclosure, in a case in which plural kinds of corresponding components exist in the composition, each component in the composition means, unless otherwise specified, the total amount of plural kinds of corresponding substances existing in the composition.

In the present disclosure, any combination of two or more preferred aspects is a more preferred aspect.

In the present disclosure, "JIS" is used as the abbreviated name of the Japanese Industrial Standards.

### (Curable Composition)

The curable composition according to the present disclosure includes a thermally-conductive filler (A), a monomer (B) having a (meth)acryloyl group, a polymerization initiator (C), a dispersant (D), and a plasticizer (E), wherein the content of the thermally-conductive filler (A) is 90% by mass or more with respect to the total mass of the curable composition, and the percentage of the content of the plasticizer (E) to the total content of the monomer (B) and the plasticizer (E) is from 40% by mass to 65% by mass.

The curable composition according to the present disclosure has such a configuration as described above, whereby the curable composition that provides a cured product having high flexibility and has excellent curability can be formed.

The enhancement of the content by percentage of the thermally-conductive filler (A) is effective for obtaining a curable composition having high thermal conductivity. The excellent thermal conductivity can be obtained by allowing the content of the thermally-conductive filler (A) to be 90% by mass or more with respect to the total mass of the curable composition. However, the content by percentage of the monomer (B) is decreased due to the enhancement of the content by percentage of the thermally-conductive filler (A), and therefore, the cured product after the curing is hardened, whereby flexibility may be deteriorated. In a case in which the flexibility is low, the cured product is incapable of following expansion caused by generation of heat from a heating element with which the cured product comes into contact, and may put physical stress on the heating element.

Thus, a technique of using the monomer (B) and the plasticizer (E) is considered to be means that imparts flexibility to the cured product. The plasticizer (E) does not have a crosslinked structure before and after reaction, and can impart flexibility to the cured product. The deterioration of curability, such as prolonged time required for curing (that is, formation of cured product), the deterioration of a physical property against the heat of the curable composition (for example, pump-out, or bleeding phenomenon), or the like occurs in a case in which a large amount of plasticizer (E) is included. The pump-out refers to a phenomenon in which the curable composition deviates due to thermal shock or the like, and heat dissipation is insufficient.

Thus, in the curable composition according to the present disclosure, the percentage of the content of the plasticizer (E) to the total content of the monomer (B) and the plasticizer (E) is allowed to be from 40% by mass to 65% by mass by adjusting a balance between the monomer (B) and the plasticizer (E) in the curable composition. As a result, the curable composition that provides a cured product having high flexibility and has excellent curability can be formed.

Each configuration of the curable composition according to the present disclosure is described below.

### -Percentages of Monomer (B) and Plasticizer (E)-

The percentage a of the content of the plasticizer (E) to the total content of the monomer (B) and the plasticizer (E) is from 40% by mass to 65% by mass. The percentage a is preferably from 45% by mass to 62% by mass, and more preferably from 50% by mass to 60% by mass.

The cured product having high flexibility is obtained in a case in which the percentage a is not less than the lower limit value described above. The curable composition having excellent curability can be formed by setting the percentage a at not more than the upper limit value described above.

### -Percentage of Plasticizer (E)-

The percentage b of the content of the plasticizer (E) to the total content of the monomer (B), the polymerization initiator (C), the dispersant (D), and the plasticizer (E) is preferably from 40% by mass to 65% by mass, preferably from 45% by mass to 62% by mass, and more preferably from 50% by mass to 60% by mass.

The cured product having high flexibility is obtained in a case in which the percentage b is not less than the lower limit value described above. The curable composition having excellent curability can be formed by setting the percentage a at not more than the upper limit value described above.

### -Percentage of Monomer (B)-

The percentage c of the content of the monomer (B) to the total content of the monomer (B), the polymerization initiator (C), the dispersant (D), and the plasticizer (E) is preferably from 30% by mass to 60% by mass, preferably from 35% by mass to 50% by mass, and more preferably from 37% by mass to 47% by mass.

The curable composition having excellent curability can be formed by setting the percentage c at not less than the lower limit value described above. The cured product having high flexibility is obtained in a case in which the percentage a is not more than the upper limit value described above.

### <Thermally-Conductive Filler (A)>

The curable composition according to the present disclosure includes the thermally-conductive filler (A).

The material of the thermally-conductive filler (A) is not particularly limited, and examples thereof include zinc oxide, magnesium oxide, aluminum oxide, boron nitride, aluminum nitride, and carbon. From the viewpoint of insulation properties, high heat conductivity, and usage results as thermally-conductive fillers, at least one selected from aluminum nitride, zinc oxide, magnesium oxide, or aluminum oxide is preferably included, and aluminum nitride and zinc oxide are more preferred.

The thermally-conductive filler (A) may be a surface-treated thermally-conductive filler. The surface-treated thermally-conductive filler improves an affinity for another component except the thermally-conductive filler, and can contribute to a reduction in viscosity and to improvement in thermal conductivity.

The surface treatment of the thermally-conductive filler is not particularly limited, and may be physical treatment or chemical treatment, and known treatment capable of treating the surfaces of particles included in the thermally-conductive filler can be applied.

The surface treatment is preferably treatment using a surface treatment agent.

Examples of the surface treatment agent include coupling agents based on silane, coupling agents based on titanium, coupling agents based on carboxylic acid, coupling agents based on phosphoric acid, fatty acids, high-molecular compounds, surfactants, and oils and fats.

The thermally-conductive filler (A) is preferably surface-treated using a coupling agent based on silane as the surface treatment agent from the viewpoint of dispersibility.

### -Content-

The content of the thermally-conductive filler (A) is 90% by mass or more, preferably from 90% by mass to 98% by mass, and more preferably from 92% by mass to 96% by mass with respect to the total mass of the composition.

The content of the thermally-conductive filler (A) is preferably 40% by volume or more, more preferably from 47% by volume to 80% by volume, and still more preferably from 60% by volume to 80% by volume with respect to the total volume of the composition.

High thermal conductivity can be obtained in a case in which the content of the thermally-conductive filler (A) is in the range described above.

### <Monomer (B) Having (Meth)Acryloyl Group>

The curable composition according to the present disclosure includes the monomer (B) having a (meth)acryloyl group. The monomer (B) having a (meth)acryloyl group may be a monomer having one (meth)acrylate group in one molecule, or may be a monomer having two or more (meth)acrylate groups in one molecule.

The monomer having one (meth)acrylate group in one molecule is not particularly limited, and examples thereof include straight-chain, branched-chain, or cyclic alkyl (meth)acrylates, and acrylic acid.

From the viewpoint of achieving both heat resistance and flexibility, the monomer having one (meth)acrylate group in one molecule is preferably a straight- or branched-chain alkyl (meth)acrylate, and still more preferably includes a compound represented by the following Formula (1).

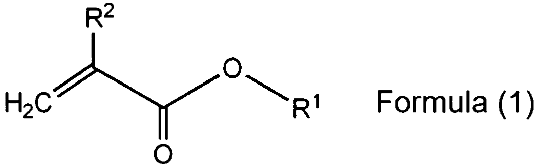

In Formula (1), R¹ represents an alkyl group having from 1 to 50 carbon atoms, and R² represents a hydrogen atom or a methyl group.

In Formula (1), the alkyl group in R¹ may be straight or branched. The alkyl group may have a substituent.

Examples of the substituent include a carboxy group, a hydroxy group, an amino group, an aryl group, and a heterocyclic group. The substituent is preferably a carboxy group or a hydroxy group, and more preferably a hydroxy group.

The number of the carbon atoms of the alkyl group in R¹ is preferably from 2 to 30, more preferably from 5 to 25, still more preferably from 10 to 25, and particularly preferably from 12 to 24 from the viewpoint of achieving both heat resistance and flexibility.

Here, "number of carbon atoms" means, in a case in which the above-described alkyl group has a substituent including carbon atoms, the total number of carbon atoms, including the number of the carbon atoms of the substituent.

From the viewpoint of achieving both heat resistance and flexibility, R¹ in Formula (1) is preferably an alkyl group which is straight or branched, or has a substituent, and of which the number of the carbon atoms (that is, total number of carbon atoms) is from 2 to 30, more preferably an alkyl group which is straight or branched, or has a hydroxyl group, and of which the number of the carbon atoms is from 2 to 25, and preferably a straight- or branched-chain, unsubstituted alkyl group having from 12 to 24 carbon atoms.

Examples of the monomer having one (meth)acrylate group in one molecule include lauryl (meth)acrylate, isostearyl (meth)acrylate, tetradecyl (meth)acrylate, hexadecyl (meth)acrylate, octadecyl (meth)acrylate, 2-hydroxyethyl (meth)acrylate, 4-hydroxybutyl (meth)acrylate, 2-hydroxybutyl (meth)acrylate, and 2-decyltetradecyl (meth)acrylate.

R² is a hydrogen atom or a methyl group, and preferably a methyl group.

Examples of the monomer having two or more (meth)acrylate groups in one molecule include hexanediol di(meth)acrylate, butanediol di(meth)acrylate (1,3-butanediol di(meth)acrylate, 1,4-butanediol di(meth)acrylate), ethylene glycol di(meth)acrylate, propylene glycol di(meth)acrylate, polyethylene glycol di(meth)acrylate, polypropylene glycol di(meth)acrylate, neopentyl glycol di(meth)acrylate, pentaerythritol di(meth)acrylate, pentaerythritol tri(meth)acrylate, dipentaerythritol hexa(meth)acrylate, and trimethylolpropane tri(meth)acrylate.

From the viewpoint of achieving both heat resistance and flexibility, the monomer having two or more (meth)acrylate groups in one molecule is preferably a compound having two and/or three (meth)acrylate groups in one molecule, more preferably a compound having two (meth)acrylate groups in one molecule, and still more preferably a compound represented by the following Formula (2).

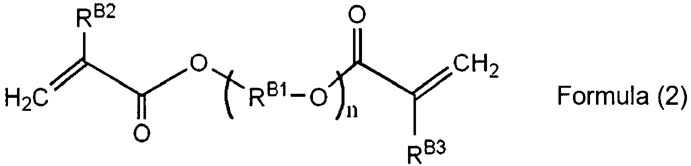

In Formula (2), R^{B1} represents an alkylene group having from 1 to 5 carbon atoms, each of R^{B2} and R^{B3} independently represents a hydrogen atom or a methyl group, and n represents an integer of 4 or more.

The alkylene group having from 1 to 5 carbon atoms, represented by R^{B1}, may be straight or branched.

From the viewpoint of flexibility, the alkylene group represented by R^{B1} is preferably a branched-chain alkylene group having from 2 to 5 carbon atoms, more preferably a straight- or branched-chain alkylene group having from 2 to 4 carbon atoms, and still more preferably a branched-chain alkylene group having 3 or 4 carbon atoms.

Each of R^{B2} and R^{B3} is independently preferably a methyl group.

It is preferable that n is from 4 to 25, it is more preferable that n is from 4 to 10, and it is still more preferable that n is from 3 to 8.

From the viewpoint of flexibility and morphological stability, it is preferable that in Formula (2), R^{B1} is a s branched-chain alkylene group having from 2 to 5 carbon atoms (more preferably a straight- or branched-chain alkylene group having from 2 to 4 carbon atoms, and still more preferably a branched-chain alkylene group having 3 or 4 carbon atoms), R^{B2} and R^{B3} are methyl groups, and n is from 4 to 25 (more preferably from 4 to 10, and still more preferably from 3 to 8).

The content of the monomer (B) having a (meth)acryloyl group is preferably from 1% by mass to 10% by mass, and more preferably from 2% by mass to 8% by mass with respect to the total mass of the composition.

In the composition, one kind of the monomer (B) having a (meth)acryloyl group may be included singly, or two or more kinds of the monomers (B) may be included.

In one embodiment, the monomer (B) having a (meth)acryloyl group preferably includes at least one selected from monomers each having one (meth)acrylate group in one molecule, and at least one selected from monomers each having two or more (meth)acrylate groups in one molecule.

A content ratio (A: B) between the content A of the monomer having one (meth)acrylate group in one molecule and the content B of the monomer having two or more (meth)acrylate groups in one molecule is preferably from 99.5:0.5 to 95:5, and more preferably from 99:1 to 97:3 from the viewpoint of the hardness and cure rate of the cured product.

The monomer (B) having a (meth)acryloyl group is preferably a monomer having a molecular weight of less than 1000.

In the present disclosure, a monomer means a polymerizable compound having a molecular weight of less than 1000, and a polymerizable polymer means a polymerizable compound having a weight-average molecular weight (Mw) of 1000 or more.

The concept of "polymerizable polymer" in the present disclosure also includes a so-called oligomer.

### <Polymerization Initiator (C)>

The curable composition according to the present disclosure includes the polymerization initiator (C).

A known thermal polymerization initiator, a known photopolymerization initiator, or the like, which is a compound that generates a polymerization initiation species such as a radical or a cation by light, heat, or both energies, can be selected and used as the polymerization initiator (C), if appropriate.

As the polymerization initiator (C), a radical polymerization initiator is preferred, a peroxide that generates a free radical by heat is more preferred, and an organic peroxide that generates a free radical by heat is still more preferred from the viewpoint of reactivity with the monomer (B) having a (meth)acryloyl group.

Examples of the organic peroxide include isobutyl peroxide, α,α'-bis(neodecanoylperoxy)diisopropylbenzene, cumylperoxyneodecanoate, di-n-propylperoxydicarbonate, di-s-butylperoxydicarbonate, 1,1,3,3-tetramethylbutylperoxyneodecanoate, bis(4-t-butylcyclohexyl)peroxydicarbonate, 1-cyclohexyl-1-methylethylperoxyneodecanoate, di-2-ethoxyethylperoxydicarbonate, di(ethylhexyl)peroxydicarbonate, t-hexylperoxyneodecanoate, dimethoxybutylperoxydicarbonate, di(3-methyl-3-methoxybutyl)peroxydicarbonate, t-butylperoxyneodecanoate, t-hexylperoxypivalate, 3,5,5-trimethylhexanoyl peroxide, octanoyl peroxide, lauroyl peroxide, stearoyl peroxide, 1,1,3,3-tetramethylbutylperoxy-2-ethylhexanoate, succinic peroxide, 2,5-dimethyl-2,5-di(2-ethylhexanoyl)hexane, 1-cyclohexyl-1-methylethylperoxy-2-ethylhexanoate, t-hexylperoxy-2-ethylhexanoate, 4-methylbenzoyl peroxide, t-butylperoxy-2-ethylhexanoate, m-toluoylbenzoyl peroxide, benzoyl peroxide, t-butylperoxyisobutyrate, 1,1-bis(t-butylperoxy)-2-methylcyclohexane, 1,1-bis(t-hexylperoxy)-3,3,5-trimethylcyclohexane, 1,1-bis(t-hexylperoxy)cyclohexane, 1,1-bis(t-butylperoxy)-3,3,5-trimethylcyclohexane, 1,1-bis(t-butylperoxy)cyclohexanone, 2,2-bis(4,4-dibutylperoxycyclohexyl)propane, 1,1-bis(t-butylperoxy)cyclododecane, t-hexylperoxyisopropylmonocarbonate, t-butyl peroxymaleic acid, t-butylperoxy-3,5,5-trimethylhexanoate, t-butylperoxylaurate, 2,5-dimethyl-2,5-di(m-toluoylperoxy)hexane, t-butylperoxyisopropylmonocarbonate, t-butylperoxy-2-ethylhexylcarbonate, t-hexylperoxybenzoate, 2,5-dimethyl-2,5-di(benzoylperoxy)hexane, t-butylperoxyacetate, 2,2-bis(t-butylperoxy)butane, t-butylperoxybenzoate, n-butyl-4,4-bis(t-butylperoxy)valerate, di-t-butylperoxyisophthalate, α,α'-bis(t-butylperoxy)diisopropylbenzene, dicumyl peroxide, 2,5-dimethyl-2,5-di(t-butylperoxy)hexane, t-butylcumyl peroxide, di-t-butyl peroxide, p-menthane hydroperoxide, 2,5-dimethyl-2,5-di(t-butylperoxy)hexyne, diisopropylbenzene hydroperoxide, t-butyltrimethylsilyl peroxide, 1,1,3,3-tetramethylbutyl hydroperoxide, cumene hydroperoxide, t-hexyl hydroperoxide, t-butyl hydroperoxide, benzoyl peroxide, and lauroyl peroxide.

Of these, the organic peroxide is preferably at least one compound selected from the group consisting of benzoyl peroxide, t-butylperoxy-2ethylhexylcarbonate 1,1,3,3-tetramethylbutylperoxy-2-ethylhexanoate, and cumene hydroperoxide from the viewpoint of reactivity.

### -Content-

The content of the polymerization initiator (C) is preferably from 0.5 parts by mass to 10 parts by mass, and more preferably from 0.5 parts by mass to 4 parts by mass with respect to 100 parts by mass of the monomer (B) having a (meth)acryloyl group.

### <Dispersant (D)>

The curable composition according to the present disclosure includes the dispersant (D).

The dispersant is not particularly limited, and examples thereof include anionic surfactants, cationic surfactants, nonionic surfactants, ampholytic surfactants, high-molecular surfactants, alcohols, compounds having carboxy groups such as fatty acids, metallic soaps, fatty acid oligomer compounds, fluorine-based surfactants, and boron-based surfactants.

The dispersant (D) is preferably at least one compound selected from the group consisting of the nonionic surfactants, the compounds having carboxy groups, and the metallic soaps.

Examples of the nonionic surfactants include polyoxyethylene alkyl ether, polyoxyethylene alkyl phenyl ether, polyoxyethylene fatty acid ester, sorbitan fatty acid ester, polyoxyethylene sorbitan fatty acid ester, polyoxyethylene sorbitol fatty acid ester, glycerol fatty acid ester, polyoxyethylene glycerin fatty acid ester, polyglycerol fatty acid ester, polyglycerol fatty acid ether, polyglycerol monoalkyl ether, sucrose fatty acid ester, polyoxyethylene alkylamine, polyethylene glycol polypropylene glycol block copolymer, acetylene glycol, and polyoxyethylene adducts of acetylene glycol.

Such a compound having a carboxy group is not particularly limited, and may be a fatty acid having one carboxy group and a hydrocarbon group in one molecule, or a compound having two or more carboxy groups in one molecule. In one embodiment, the dispersant (D) is more preferably a compound having a carboxy group, and still more preferably a fatty acid.

Examples of the compound having a carboxy group include aromatic carboxylic acids, and fatty acids having aliphatic hydrocarbon groups having from 12 to 22 carbon atoms.

Examples of the fatty acid having an aliphatic hydrocarbon group having from 12 to 22 carbon atoms include stearic acid, oleic acid, palmitic acid, myristic acid, and lauric acid.

Examples of the compound having a carboxy group include: a polyvalent carboxylic acid having two or more carboxy groups in one molecule (that is, polycarboxylic acid), such as oxalic acid, malonic acid, succinic acid, fumaric acid, maleic acid, or adipic acid; an alkylamine salt or alkylammonium salt of a polycarboxylic acid; a polycarboxylate such as polyaminoamide polycarboxylate, a sodium polycarboxylate salt, an ammonium polycarboxylate salt, or an aminoalcohol polycarboxylate salt; and a polycarboxylate-based copolymer.

Examples of a polycarboxylate-based compound include an alkylamine salt or alkylammonium salt of a polycarboxylic acid, polyaminoamide polycarboxylate, a sodium polycarboxylate salt, an ammonium polycarboxylate salt, and an aminoalcohol polycarboxylate salt.

Examples of the metallic soaps include metal salts of higher fatty acids such as calcium stearate, potassium oleate, and calcium oleate.

From the viewpoint of flexibility, at least one compound selected from the group consisting of a polyglycerol monoalkyl ether compound, a compound having a carboxy group, and a metallic soap is preferably included, at least one compound selected from the group consisting of a polyglycerol monoalkyl ether compound and a fatty acid having an aliphatic hydrocarbon group having from 12 to 22 carbon atoms is more preferably included, and at least one compound selected from the group consisting of a polyglycerol monoalkyl ether compound and a fatty acid having an unsaturated hydrocarbon group having from 18 to 22 carbon atoms is still more preferably included as the dispersant (D).

### -Content-

The content of the dispersant (D) is preferably from 0.1 parts by mass to 3 parts by mass, more preferably from 0.1 parts by mass to 1 part by mass, and particularly preferably from 0.2 parts by mass to 0.8 parts by mass with respect to 100 parts by mass of the thermally-conductive filler (A).

### <Plasticizer (E)>

The curable composition according to the present disclosure includes the plasticizer (E).

The plasticizer (E) is not particularly limited as long as the plasticizer (E) is a compound that does not have a crosslinked structure with the monomer (B) or the like. Examples of the plasticizer (E) include a polymer that can be used as a plasticizer, a fatty acid ester compound having an unsaturated hydrocarbon group, an aromatic carboxylic acid ester compound, and an oil including a fatty acid having an unsaturated hydrocarbon group and an aromatic carboxylic acid.

In the present disclosure, "polymer" means a compound having a weight-average molecular weight (Mw) of 1000 or more.

The concept of "polymer" in the present disclosure also includes a so-called oligomer.

Examples of the polymer include an acrylic polymer, a polyester-based polymer, a polyurethane-based polymer, and a silicone polymer. From the viewpoint of the heat resistance and flexibility of the obtained cured product, the polymer is preferably an acrylic polymer.

Examples of the polymer used as the plasticizer include an acrylic polymer, a polyester-based polymer, a polyurethane-based polymer, and a silicone polymer. From the viewpoint of heat resistance and flexibility, the polymer is preferably an acrylic polymer.

The acrylic polymer preferably includes a constitutional unit formed of an acrylic ester from the viewpoint of heat resistance.

A (meth)acrylic ester is preferably an alkyl (meth)acrylate. Examples of the meth)acrylic ester include methyl (meth)acrylate, ethyl (meth)acrylate, butyl (meth)acrylate, and isobutyl (meth)acrylate.

The alkyl acrylate may be a non-functionalized alkyl acrylate, or may include, for example, a functional group such as a carboxy group or a hydroxy group (hydroxyl group).

The functional group included in the alkyl acrylate is preferably a hydroxy group.

The acrylic polymer may be a polymer having a structure represented by the following Formula (P^{AC}).

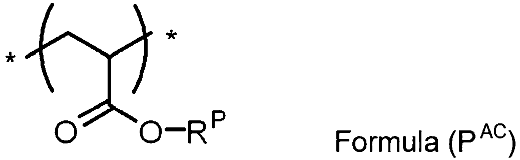

In Formula (P^{AC}), R^{p} represents a hydrogen atom or an alkyl group. In Formula (P^{AC}), the alkyl group may have a substituent. Examples of the substituent include a carboxy group, a hydroxyl group, and an amino group. The substituent is preferably a carboxy group or a hydroxy group, and more preferably a hydroxy group.

The alkyl group is preferably a saturated alkyl group, and more preferably an alkyl group having from 1 to 4 carbon atoms.

In a case in which the plasticizer (E) included in the curable composition according to the present disclosure is the polymer, the polymer is preferably a polymer having a glass transformation temperature of -20°C or less, and more preferably an acrylic polymer having a glass transformation temperature of -20°C or less from the viewpoint of the heat resistance and flexibility of the obtained cured product.

In a case in which the plasticizer the plasticizer (E) included in the curable composition according to the present disclosure is the polymer, the polymer is preferably a polymer having a glass transformation temperature of from -90°C to -20°C, and more preferably an acrylic polymer having a glass transformation temperature of from -90°C to - 20°C from the viewpoint of the heat resistance and flexibility of the obtained cured product.

The glass transformation temperature (Tg) of the polymer is determined by examining the inflection point of a DSC curve measured using a differential thermal analyzer (DSC).

In a case in which the plasticizer (E) included in the curable composition according to the present disclosure is a compound except a polymer, the plasticizer (E) is preferably a compound having a softening temperature of -20°C or less, and more preferably a compound having a softening temperature of -25°C or less from the viewpoint of the heat resistance and flexibility of the obtained cured product.

The softening temperature of the compound except a polymer is determined by examining the inflection point of a DSC curve measured using a differential thermal analyzer (DSC).

Examples of the fatty acid ester compound having an unsaturated hydrocarbon group include ester compounds of palmitoleic acid, oleic acid, linoleic acid, linolenic acid, and the like.

Examples of the aromatic carboxylic acid ester compound include ester compounds of phthalic acid, terephthalic acid, benzoic acid, trimellitic acid, and the like.

In a case in which the curable composition according to the present disclosure includes the plasticizer (E), the plasticizer (E) preferably includes the aromatic carboxylic acid ester compound, and preferably includes a trimellitate ester, from the viewpoint of high-temperature stability.

One kind of plasticizer (E) may be included singly, or two or more kinds of plasticizers (E) may be included.

### <Additional Additive>

The curable composition according to the present disclosure can include a component (hereinafter also referred to as "additional additive") except the thermally-conductive filler (A), the compound (B) having a (meth)acryloyl group, the polymerization initiator (C), the dispersant (D), and the plasticizer (E), if necessary.

As an additional additive, an additive such as a reducing agent, an antioxidant, a corrosion inhibitor, an antirust agent, or a rheology control agent (viscosity modifier) can be blended, if appropriate.

Such additives as described above may be used singly, or in combination of two or more kinds thereof.

### <Reducing Agent>

The curable composition according to the present disclosure may include a reducing agent, if necessary.

In the case of applying the curable composition according to the present disclosure to a two-component curable composition described later, any one composition is preferably allowed to contain a reducing agent. The addition of the reducing agent facilitates the decomposition of the polymerization initiator (C) (for example, peroxide), and allows polymerization reaction to easily proceed even under a low-temperature condition.

The reducing agent is not particularly limited as long as the reducing agent can accelerate the decomposition of the polymerization initiator (C), examples thereof include a known reducing agent used together with a polymerization initiator, and the reducing agent is preferably a reducing agent based on a metal compound from the viewpoint of accelerating the decomposition of the polymerization initiator (C).

Examples of the reducing agent based on a metal compound include stannous oxide, dioctyltin dilaurate, dibutyltin dilaurate, dibutyltin diacetate, zinc naphthenate, antimony trichloride, potassium olate, sodium O-phenylphenate, bismuth nitrate, ferric chloride, tetra-n-butyltin, tetra(2-ethylhexyl) titanate, cobalt 2-ethylhexoate, and ferric 2-ethylhexoate.

### -Content-

In a case in which the curable composition according to the present disclosure includes the reducing agent, the content of the reducing agent is preferably from 0.5 parts by mass to 10 parts by mass, and more preferably from 2 parts by mass to 9 parts by mass with respect to 100 parts by mass of the monomer (B) having a (meth)acryloyl group from the viewpoint of a cure rate.

Such reducing agents may be used singly, or in combination of two or more kinds thereof.

### <Antioxidant>

Examples of the antioxidant include a phenol-based antioxidant, an amine-based antioxidant, and a phosphite-based antioxidant.

### <Corrosion Inhibitor>

Examples of the corrosion inhibitor include benzotriazole, tolyltriazole, thiadiazole, and benzimidazole.

### <Antirust Agent>

Examples of the antirust agent include a compound based on a metal sulfonate, and a sorbitan compound.

### <Rheology Control Agent>

In the present disclosure, the rheology control agent refers to an additive that imparts a non-Newtonian property to a change in shear rate, and is an additive that imparts such flow characteristics that a shear viscosity is decreased in a high shear rate range while increasing a shear viscosity in a low shear rate range.

The rheology control agent may be a rheology control agent based on an inorganic compound, or may be a rheology control agent based on an organic compound. Examples of the system rheology control agent of an inorganic compound include fumed silica, bentonite, mica, and kaolin.

Examples of the rheology control agent based on an organic compound include a urea-modified polymer, a urethane-modified polymer, a castor oil wax, a polyethylene wax, a polyamide wax, and a fatty acid amide wax.

Of these, the rheology control agent is preferably a rheology control agent based on an inorganic compound, more preferably fumed silica or bentonite, and still more preferably bentonite. In the case of using fumed silica, fumed silica of which the surface is allowed to have hydrophobicity by a silane coupling agent or another surface modifying agent is preferred. In the case of using bentonite, an organobentonite subjected to organic modification with a quaternary ammonium salt or another organic modifier is preferably used.

The content of the rheology control agent is not particularly limited, and can be set, if appropriate.

### [Form of Curable Composition]

The curable composition according to the present disclosure is preferably a one-component curable composition in which one kind of a curable composition is used in a case in which the curable composition is applied to a substrate, a heat generator, or the like. The curable composition according to the present disclosure may be a two-component curable composition in which two kinds of curable compositions are mixed and used.

### [Method of Producing Curable Composition]

A method of producing the curable composition according to the present disclosure is neither particularly limited nor particularly restricted. The curable composition according to the present disclosure can be produced by, for example, the following method.

In one embodiment, the curable composition according to the present disclosure is obtained by putting, agitating, and mixing the thermally-conductive filler (A), the polymerization initiator (C), the dispersant (D), the plasticizer (F), and the additional additive in an agitation container.

A known agitator or the like can be used in the agitation and the mixture.

In the method of producing a curable composition, in the case of adding the additional additive, the agitation may be performed for only time for which the additive can be dissolved and dispersed, and the additional additive may be added into the agitation container together with the components other than the additional additive or may be added after the mixture of the components other than the additional additive.

### (Cured Product)

The cured product according to the present disclosure is a cured product of the curable composition according to the present disclosure. A method of curing the curable composition is not limited, and can be selected from commonly used methods, if appropriate. Examples of the curing method include irradiation with active energy rays, and heating, and a curing method by heating is preferred.

In the case of curing by heating, heating temperature is preferably 60°C or more, and more preferably 70°C or more. Heating and warming time is preferably from 1 minute to 120 minutes.

The cured composition described above may be cured by allowing the composition to react with atmospheric moisture, or may be cured at room temperature.

The thermal conductivity of the cured product according to the present disclosure is preferably from 0.5 (W·m/K) to 50 (W·m/K), preferably from 1 (W·m/K) to 20 (W·m/K), and more preferably from 3 (W·m/K) to 20 (W·m/K) from the viewpoint of the properties of suppressing the changes of flexibility, morphological stability, and thermal conductivity.

For the softness of the cured product according to the present disclosure, the cured product preferably has an Asker C hardness of 100 or less, more preferably 90 or less, and still more preferably 85 or less from the viewpoint of the stress relaxation of the cured product to a periphery component.

For the softness of the cured product according to the present disclosure, the Asker C can be determined according to JIS K 7312:1996.

### <Applications>

The curable composition according to the present disclosure can be preferably used as, for example, TIM filled into a recess (gap between heat generator and radiator) formed in a substrate.

The cured product obtained from the curable composition according to the present disclosure is excellent in followability to a coated surface such as a recess formed in a substrate in view of being excellent in flexibility, morphological stability, and thermal conductivity, and therefore enables heat to be efficiently dissipated even in a case in which components having different heights are present on the substrate. The curable composition according to the present disclosure can also follow the recesses and projections of a micro material on a substrate, and therefore enables heat to be efficiently dissipated. Moreover, the curable composition can be preferably applied as a gap filler in view of excellent followability to a coated surface resulting from a change in temperature.

### EXAMPLES

The curable composition and cured product according to the present disclosure are specifically described below with reference to Examples. The curable composition and cured product according to the present disclosure are not limited at all to these examples.

### (Comparative Examples 1 to 6 and Examples 1 to 3)

Each raw material was blended in an amount described in Table 1, and mixed using a planetary centrifugal mixer (product name: THINKY MIXER ARV-310, manufactured by THINKY CORPORATION) at 2000 rpm (revolutions per minute) for 2 minutes under atmospheric pressure, to prepare a curable composition.

The following evaluations were performed using curable compositions prepared in Comparative Examples 1 to 6 and Examples 1 to 3. The results are set forth in Table 1.

### -Evaluations-

### <Viscosity>

The shear viscosities η [Pa·s] at 25°C of the curable compositions prepared as described above were measured using a dynamic viscoelasticity measurement apparatus (product name: MCR 101, manufactured by Anton Paar).

A PP25 parallel plate (having a diameter of 25 mm, manufactured by Anton Paar) was used as a jig for a curable composition to be measured.

The measurement was performed by measuring a shear viscosity η [Pa·s] at each of shear rates of 0.01 [1/s], 0.1 [1/s], 1 [1/s], and 10 [1/s].

### <Thermal Conductivity (W/(m·K)>

A thermal conductivity was measured according to ASTM D5470.

The curable composition formed so that length × width × height (thickness) was 10 mm × 10 mm × 1 mm was sandwiched between copper plates of 10 mm × 10 mm in an upward-downward direction, and cured under curing conditions of 80°C and 30 minutes under N₂ purge atmosphere, and a thermal resistance (unit: K·cm²/W) was then measured by a thermal resistance measurement apparatus (product name: thermal resistance measurement apparatus, manufactured by TSUKUBARIKASEIKI Co., Ltd.), and converted into a thermal conductivity.

In this evaluation, a case in which the thermal conductivity was 3 W/(m·K) or more was evaluated as excellent thermal conductivity.

### <Pump-out Test>

A spacer having a thickness of 2 mm was placed between an aluminum plate (product name: A5052P, 80 mm in length × 60 mm in width × 1 mm in thickness) and a slide glass (76 mm in length × 26 mm in width × from 1.2 mm to 1.5 mm in thickness), and an optional amount of the curable composition was applied and sandwiched therebetween, to form a test piece. In the preparation of the test piece, the amount of curable composition was set so that the curable composition had a circular shape having a diameter of 15 mm in the case of sandwiching the curable composition. The aluminum plate and the slide glass were made into the test piece so that the longitudinal directions of the aluminum plate and the slide glass were directed at the same direction.

A thermal shock test in which the longitudinal direction of the test piece was set at a vertical direction, and a temperature change between -40°C and 125°C was alternately repeated was conducted. The thermal shock test including one cycle of performing cooling for 30 minutes under a condition of -40°C and then performing heating for 30 minutes under a condition of 125°C was conducted for 200 hours. A thermal shock test machine TSE-11-A manufactured by ESPEC CORP. was used in the heat cooling test.

After a lapse of 200 hours, movement distance (mm) from the original position of the curable composition was measured, and a pump-out property was evaluated.

The pump-out property was evaluated according to the following evaluation criteria on the basis of the measured movement distance. A less movement distance demonstrates more suppression of occurrence of a pump-out phenomenon.

### -Evaluation Criteria-

A (A): movement distance is 10 mm or less
B (C): movement distance is more than 10 mm

### <Hardness: Flexibility>

### -Softness after Cure: Asker C Hardness (Sample Thickness: 6 mm)-

The softness of the cured product of the curable composition was measured according to JIS K 7312:1996.

The curable composition was formed to be 50 mm × 20 mm × 6 mm (6 mm in thickness), and cured under curing conditions of 80°C and 60 minutes under N₂ purge atmosphere, and the Asker C hardness thereof was measured using an Asker rubber hardness tester type C (manufactured by KOBUNSHI KEIKI CO., LTD.).

The Asker C hardness of the cured product is preferably 88 or less from the viewpoint of the flexibility of the cured product.

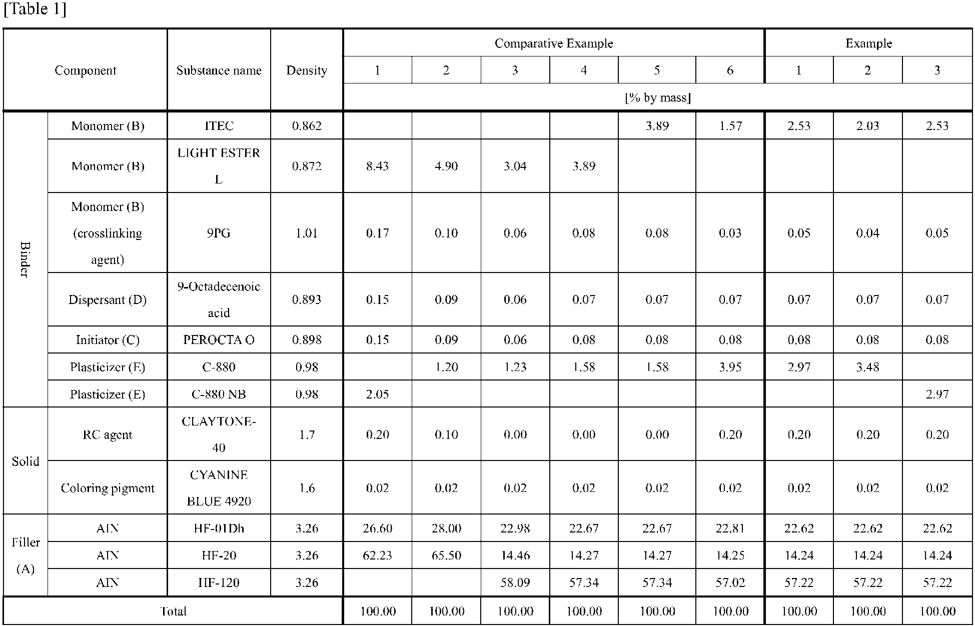

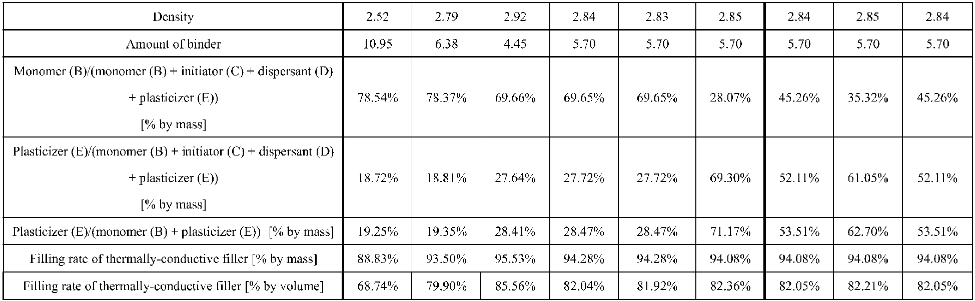

**[Table 2]**

| | | | Comparative Example | | | | | | Example | | |
|---|---|---|---|---|---|---|---|---|---|---|---|
| | | | 1 | 2 | 3 | 4 | 5 | 6 | 1 | 2 | 3 |
| | Viscosity [Pa·S] | at 0.01 [1/s] | 537 | 3286 | 3956 | 3945 | 2539 | 5391 | 2627 | 2609 | 3773 |
| | | at 0.1 [1/s] | 65 | 610 | 463 | 698 | 337 | 2540 | 1160 | 1431 | 1661 |
| | | at 1 [1/s] | 66 | 228 | 262 | 542 | 153 | 766 | 439 | 496 | 513 |
| | | at 10 [1/s] | 14 | 91 | 99 | 100 | 52 | 184 | 118 | 147 | 129 |
| Measurement | Hotdisk thermal conductivity | | 3.49 | 7.1 | 14.1 | 11.4 | 11.4 | 9.8 | 9.7 | 9.7 | 9.7 |
| | Pump-out test | | A (A) | A (A) | A (A) | A (A) | A (A) | B (C) | A (A) | A (A) | A (A) |
| | Hardness Asker C 80°C, 60 min aluminum/glass | | 90 | 97 | 95 | 91 | 90 | 65 | 85 | 70 | 85 |

The details of each component set forth in Table 1 are as follows.

In addition, "blank" in Table 1 represents that a corresponding component is not included.

In Table 1, "filling rate [% by mass]" represents the percentage of the total mass of a thermally-conductive filler (A) to the total mass of the composition.

### <<Monomer (B) Having (Meth)Acryloyl Group>>

ITEC: 2-decyltetradecyl methacrylate, manufactured by SHIN-NAKAMURA CHEMICAL Co., Ltd.

LIGHT ESTER L: lauryl methacrylate, product name: LMA, manufactured by Kyoeisha Chemical Co., Ltd.

9PG (crosslinking agent): polypropyleneglycol dimethacrylate, product name: 9PG, manufactured by SHIN-NAKAMURA CHEMICAL Co., Ltd.,

### <<Dispersant (D)>>

9-Octadecenoic acid (oleic acid), manufactured by NOF CORPORATION

### <<Polymerization Initiator (C)>>

PEROCTA O: 1,1,3,3-tetramethylbutylperoxy-2-ethylhexanoate, manufactured by NOF CORPORATION

### <<Plasticizer (E)>>

C-880: ADK CIZER C-880 (product name), mixed linear alkyl trimellitate, manufactured by ADEKA CORPORATION, softening temperature of -26°C
C-880NB: ADK CIZER C-880NB (product name), mixed linear alkyl trimellitate, manufactured by ADEKA CORPORATION, softening temperature of -26°C

### <<Thermally-Conductive Filler (A)>>

HF-01Dh: product name: HF-01Dh, manufactured by Tokuyama Corporation, aluminum nitride particles, volume-average particle diameter of 1 µm
HF-20: product name: HF-20, manufactured by Tokuyama Corporation, aluminum nitride particles, volume-average particle diameter of 20 µm
HF-120: product name: HF-120, manufactured by Tokuyama Corporation, aluminum nitride particles, volume-average particle diameter of 120 µm

As set forth in the results in Table 1, it is found that the cured products formed from the curable compositions in Examples 1 to 3 have higher flexibility than and are superior in curability to the cured products formed from the curable compositions in Comparative Examples 1 to 6. Comparative Examples 1 to 5 resulted in high Asker C hardness and poor flexibly, and Comparative Example 6 was evaluated as B (C) in the pump-out test, and resulted in poor curability.

Based on the above, the curable composition and cured product according to the present disclosure can be preferably used as gap fillers.

The entire content of the disclosure by Japanese Patent Application No. 2023-056415 is incorporated herein by reference.

All documents, patent applications, and technical standards described in this specification are herein incorporated by reference to the same extent as if each individual document, patent application, and technical standard were specifically and individually indicated to be incorporated by reference.

## Claims

1. A curable composition, comprising:
a thermally-conductive filler (A);
a monomer (B) having a (meth)acryloyl group;
a polymerization initiator (C);
a dispersant (D); and
a plasticizer (E),
wherein a content of the thermally-conductive filler (A) is 90% by mass or more with respect to a total mass of the curable composition, and
a percentage of a content of the plasticizer (E) with respect to a total content of the monomer (B) and the plasticizer (E) is from 40% by mass to 65% by mass.

2. The curable composition according to claim 1, wherein a percentage of the content of the plasticizer (E) with respect to a total content of the monomer (B), the polymerization initiator (C), the dispersant (D), and the plasticizer (E) is from 40% by mass to 65% by mass.

3. The curable composition according to claim 1, wherein a percentage of a content of the monomer (B) with respect to a total content of the monomer (B), the polymerization initiator (C), the dispersant (D), and the plasticizer (E) is from 30% by mass to 60% by mass.

4. The curable composition according to claim 1, wherein the monomer (B) comprises a compound represented by the following Formula (1): 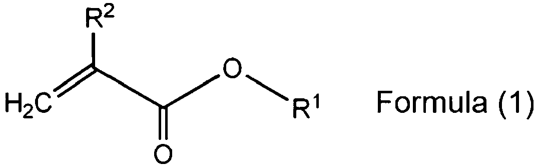 wherein, in Formula (1), R¹ represents an alkyl group having from 1 to 50 carbon atoms, and R² represents a hydrogen atom or a methyl group.

5. The curable composition according to claim 1, wherein the monomer (B) comprises a compound represented by the following Formula (2): 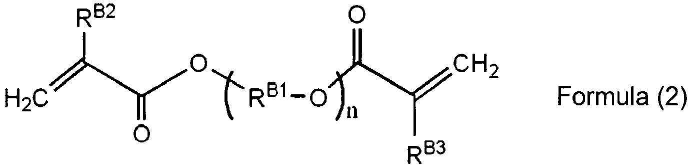 wherein, in Formula (2), R^{B1} represents an alkylene group having from 1 to 5 carbon atoms, each of R¹² and R^{B3} independently represents a hydrogen atom or a methyl group, and n represents an integer that is 4 or more.

6. The curable composition according to claim 1, wherein the plasticizer (E) comprises at least one selected from the group consisting of a polymer having a glass transformation temperature of -20°C or less, and a compound except a polymer, having a softening temperature of -20°C or less.

7. A cured product of the curable composition according to any one of claims 1 to 6.
